# EUROPEAN PATENT APPLICATION

(11) **EP 1 505 091 A1**
(43) Date of publication of application: **09.02.2005**
(21) Application number: 04016128.3
(22) Date of filing: 08.07.2004
(51) Int. Cl.: C08F 222/06, C08F 216/08, C08F 220/06, C11D 3/37

(54) **Water-soluble copolymer**

(30) Priority: 04.08.2003 JP 2003205818; 30.03.2004 JP 2004099860
(71) Applicant: Nippon Shokubai Co., Ltd., Osaka-shi, Osaka 541-0043 (JP)
(72) Inventor: Tsumori, Takahiro, Nishinomiya-shi Hyogo 662-0074 (JP); Hattori, Daisuke, Takatsuki-shi Osaka 569-0854 (JP); Yamaguchi, Shigeru, Yao-shi Osaka 581-0872 (JP)
(74) Representative: Glawe, Delfs, Moll & Partner

(57) **Abstract**

An object of the present invention is to provide a three-monomer-based water-soluble copolymer, obtained from an unsaturated monocarboxylic monomer, an unsaturated dicarboxylic monomer, and an unsaturated alcoholic monomer, wherein the water-soluble copolymer can sufficiently exercise excellent performances particularly when used for detergent builders, detergent compositions, water-treating agents, and dispersants. As a means of achieving this object, the water-soluble copolymer according to the present invention has: an unsaturated alcoholic monomer-derived structural unit content of 0.1 to 40 weight % (but not including 40 weight %); and a product of not less than 200 of the calcium-ion-binding ability and the clay dispersibility (which is measured in an aqueous solution having a calcium ion content of 50 ppm in terms of calcium carbonate) under conditions of solid component content = 40 weight % and pH = 7.5.

## Description

### BACKGROUND OF THE INVENTION

### A. TECHNICAL FIELD

The present invention relates to a water-soluble copolymer. More specifically, the present invention relates to a water-soluble copolymer which exercises excellent performances particularly when used for detergent builders, detergent compositions, water-treating agents, and dispersants.

### B. BACKGROUND ART

(Co)polymers of unsaturated carboxylic acids (e.g. acrylic acid, methacrylic acid, α-hydroxyacrylic acid, itaconic acid, maleic acid, fumaric acid, crotonic acid, citraconic acid) are water-soluble (co)polymers used favorably for detergent builders, and these water-soluble (co)polymers are eagerly studied.

A two-monomer-based water-soluble copolymer of a specific unsaturated alcoholic monomer and a specific unsaturated carboxylic monomer is reported (e.g. refer to patent document 1 below). However, this copolymer cannot yet be said to be sufficient in performances when used for detergent builders. Thus, more enhancement of the performances has been desired.

Recently, a three-monomer-based water-soluble copolymer, obtained from an unsaturated monocarboxylic monomer, an unsaturated dicarboxylic monomer, and an unsaturated alcoholic monomer, is reported (e.g. refer to patent document 2 below). However, as to this three-monomer-based water-soluble copolymer, its performances disperse according to the composition of this copolymer and, as the case may be, cannot sufficiently be exercised particularly in uses for detergent builders, detergent compositions, water-treating agents, and dispersants.
[Patent Document 1] JP-B-068323/1992 (Kokoku)
[Patent Document 2] JP-A-060433/2002 (Kokai)

### SUMMARY OF THE INVENTION

### A. OBJECT OF THE INVENTION

An object of the present invention is to provide a three-monomer-based water-soluble copolymer, obtained from an unsaturated monocarboxylic monomer, an unsaturated dicarboxylic monomer, and an unsaturated alcoholic monomer, wherein the water-soluble copolymer can sufficiently exercise excellent performances particularly when used for detergent builders, detergent compositions, water-treating agents, and dispersants.

### B. DISCLOSURE OF THE INVENTION

The present inventors diligently studied to solve the above problems.

First, the present inventors studied relations between composition and performance of the three-monomer-based water-soluble copolymer obtained from the unsaturated monocarboxylic monomer, the unsaturated dicarboxylic monomer, and the unsaturated alcoholic monomer. As a result, the present inventors have found out that, if the content of the structural unit derived from the unsaturated alcoholic monomer in the water-soluble copolymer is in the range of 0.1 to 40 weight % (but not including 40 weight %), then the water-soluble copolymer can sufficiently exercise excellent performances particularly when used for detergent builders, detergent compositions, water-treating agents, and dispersants.

Furthermore, the present inventors studied an index showing that the water-soluble copolymer can sufficiently exercise excellent performances particularly when used for detergent builders, detergent compositions, water-treating agents, and dispersants. As a result, the present inventors have found that the product of the calcium-ion-binding ability and the clay dispersibility (which is measured in an aqueous solution having a calcium ion content of 50 ppm in terms of calcium carbonate) under conditions of solid component content = 40 weight % and pH = 7.5 is an index which can precisely reflect an occasion when such as detergent is actually used, and that, when this product is not less than 200, the calcium-ion-binding ability and the clay dispersibility are both excellent with good balance, so the water-soluble copolymer can sufficiently exercise excellent performances particularly when used for detergent builders, detergent compositions, water-treating agents, and dispersants.

That is to say, a water-soluble copolymer according to the present invention is a water-soluble copolymer containing the following structural unit (1) derived from an unsaturated monocarboxylic monomer, the following structural unit (2) derived from an unsaturated dicarboxylic monomer, and the following structural unit (3) derived from an unsaturated alcoholic monomer, wherein:
the structural unit (1) is 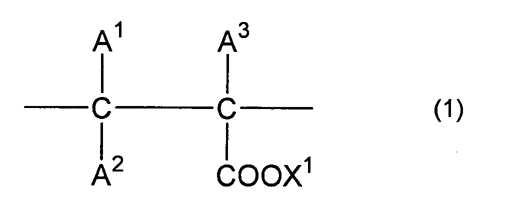 (in general formula (1) above: A¹, A², and A³ each independently represent a hydrogen atom or a methyl group; and X¹ represents a hydrogen atom, a monovalent metal, a divalent metal, an ammonium group, or an organic amine group);
the structural unit (2) is 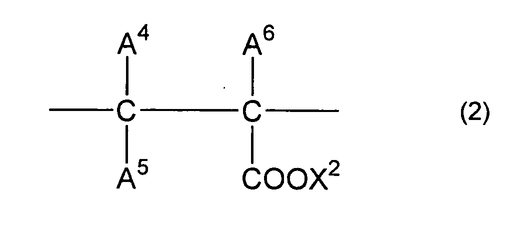 (in general formula (2) above: A⁴ and A⁵ each independently represent a hydrogen atom, a methyl group, or -COOX³; and A⁶ represents a hydrogen atom, a methyl group, or -CH₂COOX⁴; and further, only any one of A⁴, A⁵, and A⁶ is -COOX³ or -CH₂COOX⁴; and X², X³, and X⁴ each independently or all together represent a hydrogen atom, a monovalent metal, a divalent metal, an ammonium group, or an organic amine group); and
the structural unit (3) is 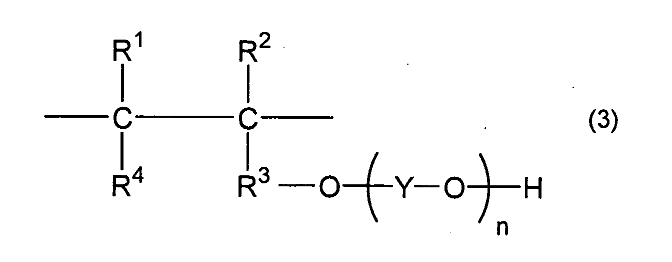 (in general formula (3) above: R¹, R², and R⁴ each independently represent a hydrogen atom or a methyl group; and R¹ (or R⁴) and R² are not simultaneously the methyl groups; and R³ represents -CH₂-, -(CH₂)₂-, or -C(CH₃)₂-; and the total number of the carbon atoms in R¹, R², R³, and R⁴ is in the range of 1 to 3; and Y represents an alkylene group having 2 to 18 carbon atoms; and n is an integer of 1 to 300);
with the water-soluble copolymer being characterized by having: a structural unit (3) content of 0.1 to 40 weight % (but not including 40 weight %); and a product of not less than 200 of the calcium-ion-binding ability and the clay dispersibility (which is measured in an aqueous solution having a calcium ion content of 50 ppm in terms of calcium carbonate) under conditions of solid component content = 40 weight % and pH = 7.5.

A detergent builder according to the present invention comprises, as an essential component, the above water-soluble copolymer according to the present invention.

A detergent composition according to the present invention comprises a detergent builder that contains, as an essential component, the above water-soluble copolymer according to the present invention.

The detergent composition according to the present invention is favorably used for liquid detergents.

A water-treating agent according to the present invention comprises, as an essential component, the above water-soluble copolymer according to the present invention.

A dispersant according to the present invention comprises, as an essential component, the above water-soluble copolymer according to the present invention.

### C. EFFECTS OF THE INVENTION

The present invention can provide a three-monomer-based water-soluble copolymer, obtained from an unsaturated monocarboxylic monomer, an unsaturated dicarboxylic monomer, and an unsaturated alcoholic monomer, wherein the water-soluble copolymer can sufficiently exercise excellent performances particularly when used for detergent builders, detergent compositions, water-treating agents, and dispersants.

These and other objects and the advantages of the present invention will be more fully apparent from the following detailed disclosure.

### DETAILED DESCRIPTION OF THE INVENTION

Hereinafter, detailed descriptions are given about the present invention. However, the scope of the present invention is not bound to these descriptions. And other than the following illustrations can also be carried out in the form of appropriate modifications of the following illustrations within the scope not departing from the spirit of the present invention.

### [Water-soluble copolymer]:

The water-soluble copolymer according to the present invention is a water-soluble copolymer containing a structural unit (1) derived from an unsaturated monocarboxylic monomer, a structural unit (2) derived from an unsaturated dicarboxylic monomer, and a structural unit (3) derived from an unsaturated alcoholic monomer, with the water-soluble copolymer having a structural unit (3) content of 0.1 to 40 weight % (but not including 40 weight %).

As to the water-soluble copolymer according to the present invention, it is important that the structural unit (3) content is in the range of 0.1 to 40 weight % (but not including 40 weight %), favorably 0.5 to 38 weight % (but not including 38 weight %), more favorably 1 to 36 weight %, still more favorably 10 to 34 weight %, particularly favorably 15 to 32 weight %.

In the case where the structural unit (3) content is lower than 0.1 weight % or not lower than 40 weight %, the water-soluble copolymer cannot sufficiently exercise excellent performances particularly when used for detergent builders, detergent compositions, water-treating agents, and dispersants.

As to the water-soluble copolymer according to the present invention, it is important that the total of the structural unit (1) content and the structural unit (2) content is in the range of 60 to 99.9 weight % (but not including 60 weight %), favorably 62 to 99.5 weight % (but not including 62 weight %), more favorably 64 to 99 weight %, still more favorably 66 to 90 weight %, particularly favorably 68 to 85 weight %.

The content of each of the structural unit (1) derived from the unsaturated monocarboxylic monomer, the structural unit (2) derived from the unsaturated dicarboxylic monomer, and the structural unit (3) derived from the unsaturated alcoholic monomer, in the water-soluble copolymer according to the present invention, can be grasped, for example, by measuring the integral ratio in a ¹H NMR chart. However, there is no limitation to such a method.

The process for production of the water-soluble copolymer according to the present invention is not especially limited. However, favorably, this copolymer is obtained by a process including the step of copolymerizing a monomer component essentially including the following unsaturated monocarboxylic monomer (1a), the following unsaturated dicarboxylic monomer (2a) and/or (2b), and the following unsaturated alcoholic monomer (3a), wherein:
the unsaturated monocarboxylic monomer (1a) is 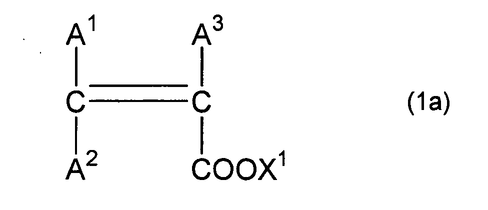 (in general formula (1a) above: A¹, A², and A³ each independently represent a hydrogen atom or a methyl group; and X¹ represents a hydrogen atom, a monovalent metal, a divalent metal, an ammonium group, or an organic amine group);
the unsaturated dicarboxylic monomer (2a) is 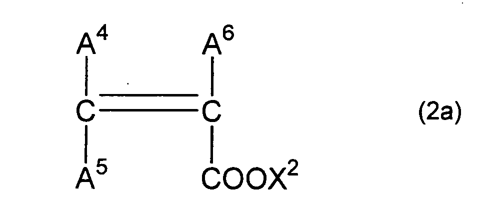 (in general formula (2a) above: A⁴ and A⁵ each independently represent a hydrogen atom, a methyl group, or -COOX³; and A⁶ represents a hydrogen atom, a methyl group, or -CH₂COOX⁴; and further, only any one of A⁴, A⁵, and A⁶ is -COOX³ or -CH₂COOX⁴; and X², X³, and X⁴ each independently or all together represent a hydrogen atom, a monovalent metal, a divalent metal, an ammonium group, or an organic amine group);
the unsaturated dicarboxylic monomer (2b) is 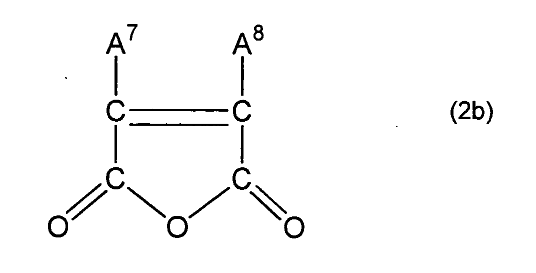 (in general formula (2b) above: A⁷ and A⁸ each independently represent a hydrogen atom or a methyl group); and
the unsaturated alcoholic monomer (3a) is 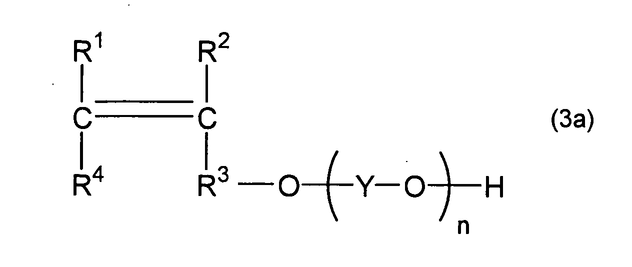 (in general formula (3a) above: R¹, R², and R⁴ each independently represent a hydrogen atom or a methyl group; and R¹ (or R⁴) and R² are not simultaneously the methyl groups; and R³ represents -CH₂-, -(CH₂)₂-, or -C(CH₃)₂-; and the total number of the carbon atoms in R¹, R², R³, and R⁴ is in the range of 1 to 3; and Y represents an alkylene group having 2 to 18 carbon atoms; and n is an integer of 1 to 300).

The unsaturated monocarboxylic monomer (1a), usable in the present invention, is free of especial limitation if it is a monomer which can be shown by general formula (1a) above. However, examples thereof include acrylic acid, methacrylic acid, crotonic acid, or products obtained by partially or entirely neutralizing these acids with monovalent metals, divalent metals, ammonia, or organic amines.

The unsaturated dicarboxylic monomer (2a) or (2b), usable in the present invention, is free of especial limitation if it is a monomer which can be shown by general formula (2a) or (2b) above. However, examples of the monomer which can be shown by general formula (2a) above include maleic acid, fumaric acid, itaconic acid, citraconic acid, or products obtained by partially or entirely neutralizing these acids with monovalent metals, divalent metals, ammonia, or organic amines. Examples of the monomer which can be shown by general formula (2b) above include maleic anhydride and citraconic anhydride.

The unsaturated alcoholic monomer (3a), usable in the present invention, is free of especial limitation if it is a monomer which can be shown by general formula (3a) above. However, examples thereof include compounds obtained by addition reactions of 1 to 300 mols (favorably 3 to 100 mols, more favorably 5 to 50 mols) of alkylene oxides (having 2 to 18 carbon atoms) to 1 mol of unsaturated alcohols (e.g. 3-methyl-3-buten-1-ol, 3-methyl-2-buten-1-ol, 2-methyl-3-buten-2-ol, (meth)allyl alcohol).

Examples of the alkylene oxides having 2 to 18 carbon atoms include styrene oxide, ethylene oxide, and propylene oxide. However, it is favorable to use ethylene oxide and/or propylene oxide. In the case where ethylene oxide and propylene oxide are used together, their bonding order is not limited. In the case where the molar degree of addition polymerization of ethylene oxide and/or propylene oxide is less than 1 mol, there are disadvantages in that the effects of the present invention cannot sufficiently be exercised. On the other hand, in the case where the molar degree of addition polymerization of ethylene oxide and/or propylene oxide is more than 300 mols, there are disadvantages in that: no enhancement of the effects of the present invention is seen, and a large amount of addition is merely needed. Moreover, the unsaturated alcoholic monomer (3a) may be used either as it is or in the form of an aqueous solution.

The water-soluble copolymer according to the present invention is favorably obtained by the process including the step of copolymerizing the monomer component essentially including the unsaturated monocarboxylic monomer (1a), the unsaturated dicarboxylic monomer (2a) and/or (2b), and the unsaturated alcoholic monomer (3a). However, if necessary, besides the monomers (1a), (2a) and/or (2b), and (3a), another monomer copolymerizable with these monomers may be included in the above monomer component.

Although not especially limited, examples of the above other monomer include: styrene; styrenesulfonic acid (salts); vinyl acetate; (meth)acrylonitrile; (meth)acrylamide; (meth)acrylamido-2-methylpropanesulfonic acid (salts); methyl (meth)acrylate; ethyl (meth)acrylate; butyl (meth)acrylate; sulfoethyl (meth)acrylate; 2-ethylhexyl (meth)acrylate; dimethylaminoethyl (meth)acrylate; diethylaminoethyl (meth)acrylate; isoprenesulfonic acid (salts); allylsulfonic acid (salts); (meth)allyl alcohol; 3-methyl-3-buten-1-ol; 3-methyl-2-buten-1-ol; 2-methyl-3-buten-2-ol; 3-(meth)acryloxy-1,2-dihydroxypropane; 3-(meth)acryloxy-1,2-di(poly)oxyethylene ether propane; 3-(meth)acryloxy-1,2-di(poly)oxypropylene ether propane; 3-(meth)acryloxy-1,2-dihydroxypropanephosphate and its monovalent metal salts, divalent metal salts, ammonium salts, organic amine salts, or mono- or diesters of alkyl groups having 1 to 4 carbon atoms; 3-(meth)acryloxy-1,2-dihydroxypropanesulfate and its monovalent metal salts, divalent metal salts, ammonium salts, organic amine salts, or esters of alkyl groups having 1 to 4 carbon atoms; 3-(meth)acryloxy-2-hydroxypropanesulfonic acid and its monovalent metal salts, divalent metal salts, ammonium salts, organic amine salts, or esters of alkyl groups having 1 to 4 carbon atoms; 3-(meth)acryloxy-2-(poly)oxyethylene ether propanesulfonic acid and its monovalent metal salts, divalent metal salts, ammonium salts, organic amine salts, or esters of alkyl groups having 1 to 4 carbon atoms; 3-(meth)acryloxy-2-(poly)oxypropylene ether propanesulfonic acid and its monovalent metal salts, divalent metal salts, ammonium salts, organic amine salts, or esters of alkyl groups having 1 to 4 carbon atoms; 3-alloxypropane-1,2-diol; 3-alloxypropane-1,2-diol phosphate; 3-alloxypropane-1,2-diol sulfonate; 3-alloxypropane-1,2-diol sulfate; 3-alloxy-1,2-di(poly)oxyethylene ether propane; 3-alloxy-1,2-di(poly)oxyethylene ether propanephosphate; 3-alloxy-1,2-di(poly)oxyethylene ether propanesulfonate; 3-alloxy-1,2-di(poly)oxypropylene ether propane; 3-alloxy-1,2-di(poly)oxypropylene ether propanephosphate; 3-alloxy-1,2-di(poly)oxypropylene ether propanesulfonate; 6-alloxyhexane-1,2,3,4,5-pentaol; 6-alloxyhexane-1,2,3,4,5-pentaol phosphate; 6-alloxyhexane-1,2,3,4,5-pentaol sulfonate; 6-alloxyhexane-1,2,3,4,5-penta(poly)oxyethylene ether hexane; 6-alloxyhexane-1,2,3,4,5-penta(poly)oxypropylene ether hexane; 3-allyloxy-2-hydroxypropanesulfonic acid and its monovalent metal salts, divalent metal salts, ammonium salts, or organic amine salts, or phosphate esters or sulfate esters of these compounds, and their monovalent metal salts, divalent metal salts; ammonium salts, or organic amine salts; 3-allyloxy-2-(poly)oxyethylenepropanesulfonic acid and its monovalent metal salts, divalent metal salts, ammonium salts, or organic amine salts, or phosphate esters or sulfate esters of these compounds, and their monovalent metal salts, divalent metal salts, ammonium salts, or organic amine salts; and 3-allyloxy-2-(poly)oxypropylenepropanesulfonic acid and its monovalent metal salts, divalent metal salts, ammonium salts, or organic amine salts, or phosphate esters or sulfate esters of these compounds, and their monovalent metal salts, divalent metal salts, ammonium salts, or organic amine salts.

The water-soluble copolymer according to the present invention is favorably obtained by the process including the step of copolymerizing the monomer component essentially including the unsaturated monocarboxylic monomer (1a), the unsaturated dicarboxylic monomer (2a) and/or (2b), and the unsaturated alcoholic monomer (3a). The copolymerization method is not especially limited. For example, prior publicly known methods can be adopted. Specific examples thereof include polymerization in solvents such as: water; organic solvents; or mixed solvents of water-soluble organic solvents and water. Although not especially limited, examples of catalyst (polymerization initiator) systems usable for these polymerizations include: persulfates; hydrogen peroxide; azo initiators; organic peroxides; joint use of persulfates/hydrogen peroxide; joint use of persulfates/bisulfites; joint use of hydrogen peroxide/ascorbic acid; and joint use of hydrogen peroxide/metal ions. Above all, the joint use of persulfates/hydrogen peroxide, the joint use of persulfates/bisulfites, the joint use of hydrogen peroxide/ascorbic acid, and the joint use of hydrogen peroxide/metal ions are favorable in that the molecular weight can be prevented from becoming high or in that the polymerization of the monomers can efficiently be carried out. In addition, in the case where the metal ion is used, it is favorable to use at least one metal ion selected from the group consisting of vanadium-atom-containing ions, copper ions, and iron ions. In addition, in the case where the unsaturated dicarboxylic monomer content is not lower than 30 weight %, the joint use of persulfates/hydrogen peroxide is favorable in that the residual dicarboxylic acid content can be reduced.

As to each component, its entirety may be dropped, or a part or the entirety may beforehand be charged into the reaction system. Besides, when the dropping is carried out, the liquid component may be added as it is or may be dropped in the form dissolved in a solvent (favorably, water). As to the solid component, it is favorably dropped in the form dissolved in a solvent (favorably, water) or melted.

The period of the dropping may be different according to the components. The rate of the dropping may be constant from beginning to end of the dropping or may be varied if necessary.

Although not especially limited, the periods of time for which the above monomer component and the above catalyst (polymerization initiator) system are added is favorably in the range of 30 minutes to 8 hours, more favorably 60 minutes to 6 hours, still more favorably 90 minutes to 4 hours. Of these, the period of time for which only the catalyst (polymerization initiator) system is added is favorably in the range of 0 to 3 hours, more favorably 0 to 2 hours, still more favorably 0 to 1 hour.

The pH of the polymerization reaction liquid until the end of the additions of the monomer component and the catalyst (polymerization initiator) system to the reaction system is not especially limited. However, this pH is favorably kept less than 5, more favorably less than 4.5, still more favorably less than 4.0. In the case where the pH is raised to not less than 5, there is a possibility that the copolymerizability of the carboxylic monomers with the unsaturated alcoholic monomer may be spoiled, thus resulting in no smooth running of the polymerization reaction.

While the polymerization reaction is promoted without adding the monomer component and the catalyst (polymerization initiator) system into the reaction system any more after the completion of the additions of the entireties of the monomer component and the catalyst (polymerization initiator) system into the reaction system (this promotion is referred to as aging), it is favorable that the pH is not less than 5. In the case where the pH is less than 5 still during the aging, there is a possibility that: if the pH is raised to not less than 5 after the completion of the polymerization, then the weight-average molecular weight of the water-soluble copolymer according to the present invention may decrease with the passage of time.

Furthermore, the concentration during the polymerization is not especially limited. However, in the case where the concentration during the polymerization is higher than 45 weight %, there is a possibility that: if the pH of the aqueous solution of the water-soluble copolymer according to the present invention is raised to not less than 5, then the turbidity may occur to this aqueous solution. In addition, the "concentration during the polymerization" in the present invention refers to [(weight of all components other than solvent in polymerization reaction liquid)/(total weight of polymerization reaction liquid)] × 100 (%) during the polymerization.

It is important that the total of the unsaturated monocarboxylic monomer (1a) content and the unsaturated dicarboxylic monomer (2a) and/or (2b) content in the monomer component essentially including the unsaturated monocarboxylic monomer (1a), the unsaturated dicarboxylic monomer (2a) and/or (2b), and the unsaturated alcoholic monomer (3a) is in the range of 60 to 99.9 weight % (but not including 60 weight %), favorably 62 to 99.5 weight % (but not including 62 weight %), more favorably 64 to 99 weight %, still more favorably 66 to 90 weight %, particularly favorably 68 to 85 weight %.

The ratio between the unsaturated monocarboxylic monomer (1a) and the unsaturated dicarboxylic monomer (2a) and/or (2b) is not especially limited. However, (unsaturated monocarboxylic monomer (1a)):(unsaturated dicarboxylic monomer (2a) and/or (2b)) is favorably in the range of 1:99 to 99:1 (molar ratio), more favorably 10:90 to 97.5:2.5 (molar ratio), still more favorably 20:80 to 95:5 (molar ratio), particularly favorably 50:50 to 90:10 (molar ratio).

It is important that the unsaturated alcoholic monomer (3a) content in the monomer component essentially including the unsaturated monocarboxylic monomer (1a), the unsaturated dicarboxylic monomer (2a) and/or (2b), and the unsaturated alcoholic monomer (3 a) is in the range of 0.1 to 40 weight % (but not including 40 weight %), favorably 0.5 to 38 weight % (but not including 38 weight %), more favorably 1 to 36 weight %, still more favorably 10 to 34 weight %, particularly favorably 15 to 32 weight %.

The aforementioned other monomer content in the monomer component essentially including the unsaturated monocarboxylic monomer (1a), the unsaturated dicarboxylic monomer (2a) and/or (2b), and the unsaturated alcoholic monomer (3a) is favorably in the range of 0 to 30 weight %, more favorably 0 to 20 weight %, still more favorably 0 to 10 weight %, particularly favorably 0 to 5 weight %.

The water-soluble copolymer according to the present invention, having favorably been obtained by the above production process, can sufficiently exercise excellent performances particularly when used for detergent builders, detergent compositions, water-treating agents, and dispersants, and has a product of not less than 200 of the calcium-ion-binding ability and the clay dispersibility (which is measured in an aqueous solution having a calcium ion content of 50 ppm in terms of calcium carbonate) under conditions of solid component content = 40 weight % and pH = 7.5.

The product of the calcium-ion-binding ability and the clay dispersibility (which is measured in an aqueous solution having a calcium ion content of 50 ppm in terms of calcium carbonate) under conditions of solid component content = 40 weight % and pH = 7.5 is favorably not less than 202, more favorably not less than 205, still more favorably not less than 210, particularly favorably not less than 215.

In the case where the product of the calcium-ion-binding ability and the clay dispersibility (which is measured in an aqueous solution having a calcium ion content of 50 ppm in terms of calcium carbonate) under conditions of solid component content = 40 weight % and pH = 7.5 is less than 200, the water-soluble copolymer cannot sufficiently exercise excellent performances particularly when used for detergent builders, detergent compositions, water-treating agents, and dispersants.

As to the water-soluble copolymer according to the present invention, its calcium-ion-binding ability under conditions of solid component content = 40 weight % and pH = 7.5 is favorably not less than 200, more favorably not less than 202, still more favorably not less than 204, particularly favorably not less than 206.

As to the water-soluble copolymer according to the present invention, its clay dispersibility (which is measured in an aqueous solution having a calcium ion content of 50 ppm in terms of calcium carbonate) under conditions of solid component content = 40 weight % and pH = 7.5 is favorably not less than 1.00, more favorably not less than 1.02, still more favorably not less than 1.04, particularly favorably not less than 1.06.

In the present invention, the calcium-ion-binding ability and the clay dispersibility (which is measured in an aqueous solution having a calcium ion content of 50 ppm in terms of calcium carbonate) are measured under conditions of solid component content = 40 weight % and pH = 7.5. Specifically, for example, the acid groups (carboxyl groups), possessed by the water-soluble copolymer to be measured, are neutralized with alkaline substances (e.g. hydroxides, chlorides, carbonates and bicarbonates of monovalent metals and divalent metals; ammonia; organic amines), whereby the conditions are adjusted to solid component content = 40 weight % and pH = 7.5. On an occasion when the water-soluble copolymer according to the present invention is actually used for detergent builders, detergent compositions, water-treating agents, and dispersants, it is usually general to use this copolymer under conditions where the pH is in the range of neutrality to alkalinity (favorably 6.0 to 11.5, more favorably 7.0 to 11.0). Therefore, if the calcium-ion-binding ability and the clay dispersibility (which is measured in an aqueous solution having a calcium ion content of 50 ppm in terms of calcium carbonate) are measured under conditions of pH = 7.5 (which is in the range of neutrality to alkalinity), then it follows that an actual use occasion is precisely reflected, so the effects of the present invention can more precisely be indicated.

As to the water-soluble copolymer according to the present invention, its weight-average molecular weight is favorably in the range of 1,000 to 1,000,000, more favorably 2,000 to 200,000, particularly favorably 4,000 to 50,000. In the case where the weight-average molecular weight is lower than 1,000, there is an unfavorable possibility that the calcium-ion-binding ability and the clay dispersibility may be inferior. In the case where the weight-average molecular weight is higher than 1,000,000, there is an unfavorable possibility that the clay dispersibility may be inferior.

When the water-soluble copolymer according to the present invention has been produced, it is favorable that the amount of the residual unsaturated dicarboxylic monomer is not larger than 20 weight % relative to the amount of the added unsaturated dicarboxylic monomer, and further that the amount of the residual unsaturated alcoholic monomer is not larger than 40 weight % relative to the amount of the added unsaturated alcoholic monomer. If the amount of each residual monomer is on this level, then still more excellent performances can be exercised.

The amount of the residual unsaturated dicarboxylic monomer is favorably not larger than 20 weight %, more favorably not larger than 15 weight %.

The amount of the residual unsaturated alcoholic monomer is favorably not larger than 40 weight %, more favorably not larger than 30 weight %.

In the case where the amount of the residual unsaturated dicarboxylic monomer is larger than 20 weight %, there are disadvantages in point of the safety, and besides, the carboxylic acid content of the copolymer decreases to thus result in the deterioration of the chelating ability and dispersibility, and besides, when the copolymer is used in water-soluble condition, there is an unfavorable possibility that, depending on the pH of the liquid, the residual unsaturated dicarboxylic monomer may become insoluble.

In the case where the amount of the residual unsaturated alcoholic monomer is larger than 40 weight %, the effective component content of the copolymer decreases to thus result in the deterioration of performances, above all, such as the dispersibility and the compatibility with liquid detergents, and besides, there is an unfavorable possibility that a change with the passage of time may be caused because the unsaturated alcoholic monomer is reactive.

The water-soluble copolymer according to the present invention can be used favorably for various uses. Specific examples of these uses include: dispersants for aqueous slurries of inorganic pigments; cement admixtures; scale inhibitors; rust preventives; anticorrosives; detergent builders; detergent compositions; deinking agents for recycling of old paper; chelating agents; various dye dispersants; agricultural chemical dispersants; scouring and washing agents for cotton; and coal dispersants. Particularly the uses for detergent builders, detergent compositions, water-treating agents, and dispersants are favorable in that the effects of the present invention can still more be exercised.

### [Detergent builder]:

The detergent builder according to the present invention comprises, as an essential component, the water-soluble copolymer according to the present invention.

Specifically, the detergent builder according to the present invention may comprise only the water-soluble copolymer according to the present invention, or may be used in the form of a mixture with other detergent builders which are publicly known. In addition, if necessary, the water-soluble copolymer used for the detergent builder according to the present invention may be that which has further been neutralized with alkaline substances. In the case where the water-soluble copolymer is neutralized with the alkaline substances, the pH is favorably adjusted in the range of 6 to 11, more favorably 6.25 to 10.5, particularly favorably 6.5 to 10.

Although not especially limited, examples of the above other detergent builders include: sodium tripolyphosphate; sodium pyrophosphate; sodium silicate; mirabilite; sodium carbonate; sodium nitrilotriacetate; sodium- or potassium ethylenediaminetetraacetate; zeolite; carboxyl derivatives of polysaccharides; and water-soluble polymers such as (meth)acrylic acid (co)polymer salts and fumaric acid (co)polymer salts.

The detergent builder according to the present invention may be used either for liquid detergents or for powder detergents. However, in the case where the detergent builder according to the present invention is used for liquid detergent compositions, the compatibility of this detergent builder with surfactants is, as mentioned below, so excellent that high-concentrated liquid detergent compositions can be obtained. In this respect, the use for liquid detergents is favorable.

### [Detergent composition]:

The detergent composition according to the present invention comprises the detergent builder that contains, as an essential component, the water-soluble copolymer according to the present invention.

Favorably, the detergent composition according to the present invention contains a surfactant besides the aforementioned water-soluble copolymer.

The surfactant, which is favorably contained in the detergent composition according to the present invention, is at least one member selected from among anionic surfactants, nonionic surfactants, cationic surfactants and amphoteric surfactants. These surfactants may be used either alone respectively or in combinations with each other.

Specific examples of the anionic surfactants include alkylbenzenesulfonate salts, alkyl or alkenyl ether sulfate salts, alkyl or alkenyl sulfate salts, α-olefinsulfonate salts, α-sulfofatty acids or their ester salts, alkanesulfonate salts, saturated or unsaturated fatty acid salts, alkyl or alkenyl ether carboxylate salts, amino acid type surfactants, N-acylamino acid type surfactants, and alkyl or alkenyl phosphate esters or their salts. In addition, an alkyl group (e.g. methyl group) may branch from the alkyl or alkenyl group of these anionic surfactants in an intermediate portion of this alkyl or alkenyl group.

Specific examples of the nonionic surfactants include polyoxyalkylene alkyl or alkenyl ethers, polyoxyethylene alkyl phenyl ethers, higher fatty acid alkanolamides or their alkylene oxide addition products, sucrose fatty acid esters, alkyl glycoxides, fatty acid glycerol monoesters, and alkylamine oxides. In addition, an alkyl group (e.g. methyl group) may branch from the alkyl or alkenyl group of these nonionic surfactants in an intermediate portion of this alkyl or alkenyl group.

Specific examples of the cationic surfactants include quaternary ammonium salts.

Specific examples of the amphoteric surfactants include carboxyl type or sulfobetaine type amphoteric surfactants.

The mixing ratio of the surfactant, which is contained in the detergent composition according to the present invention, is favorably in the range of 10 to 60 weight %, more favorably 15 to 50 weight %, relative to the detergent composition. In the case where the mixing ratio of the surfactant is less than 10 weight %, sufficient detergency cannot be exercised. On the other hand, in the case where the mixing ratio of the surfactant is more than 60 weight %, the economy is low.

The mixing ratio of the detergent builder according to the present invention, which is contained in the detergent composition according to the present invention, is favorably in the range of 0.1 to 40 weight %, more favorably 0.2 to 30 weight %, relative to the detergent composition. In the case where the mixing ratio of the detergent builder is less than 0.1 weight %, sufficient detergency cannot be exercised. On the other hand, in the case where the mixing ratio of the detergent builder is more than 40 weight %, the economy is low.

To the detergent composition according to the present invention, there can be added various additives which are conventionally used for detergents. Examples thereof include: sodium carboxymethyl cellulose for inhibiting the redeposition of contaminants; soil-preventing agents (e.g. benzotriazole, ethylene-thiourea); alkaline substances for pH adjustment; perfumes; fluorescent agents; colorants; bubble-generating agents; bubble-stabilizing agents; lustering agents; fungicides; bleaching agents; enzymes; dyes; and solvents.

The detergent composition according to the present invention may be used either for liquid detergents or for powder detergents. However, the compatibility with surfactants is so excellent that high-concentrated liquid detergent compositions can be obtained. In this respect, the use for liquid detergents is favorable.

### [Other uses]:

The water-soluble copolymer according to the present invention can be used also for pigment dispersants and scale inhibitors.

In the case where the water-soluble copolymer according to the present invention is used as an essential component to prepare the pigment dispersants, there can be prepared dispersion liquids which are excellent in the dispersibility and are low in viscosity even when high in concentration and are excellent in the stability. Therefore, this copolymer can be used particularly favorably as a dispersant which is used to disperse pigments for paper, and besides, this copolymer can be applied widely also in fields of such as fiber processing, building material processing, paints, and ceramics.

In the case where the water-soluble copolymer according to the present invention is used as an essential component to prepare the scale inhibitors, a high scale inhibition effect can be displayed.

The water-soluble copolymer according to the present invention is excellent in the aforementioned various performances and is therefore usable favorably for water-treating agents and dispersants.

That is to say, the water-treating agent according to the present invention comprises, as an essential component, the water-soluble copolymer according to the present invention. In addition, the dispersant according to the present invention comprises, as an essential component, the water-soluble copolymer according to the present invention.

### DETAILED DESCRIPTION OF THE PREFERRED EMBODIMENTS

Hereinafter, the present invention is more specifically illustrated by the following Examples of some preferred embodiments in comparison with Comparative Examples not according to the present invention. However, the present invention is not limited to these Examples in any way. Hereinafter, unless otherwise noted, the unit "weight %" is referred to simply as "%".

Incidentally, various physical properties of the copolymers, as obtained from the following Examples and Comparative Examples, were measured in the following ways.

### <Measurement of weight-average molecular weight (GPC analysis)>:

Device: L-7000 series, produced by Hitachi Co., Ltd.
Detector: RI
Columns: SHODEX Asahipak GF-310-HQ, GF-710-HQ, GF-1G 7B, produced by SHOWA DENKO Corporation
Column temperature: 40 °C
Flow rate: 0.5 mL/min
Calibration curve: POLYACRYLIC ACID STANDARD, produced by Sowa Kagaku Co., Ltd.
Eluent: 0.1N sodium acetate/acetonitrile = 3/1 (weight ratio)

### <Measurement of solid component content>:

The solid component content was defined as the nonvolatile component content left behind the treatment with a hot-air drier of 110 °C for 2 hours.

### <Measurement of acid value>:

The acid value was calculated by titration with 0.1N NaOH. In the case where the copolymer is not the acid type, the acid value was calculated by back titration with 0.1N HCl.

### <Method for measurement of residual monomer content (LC analysis)>:

Device: LC Module 1 plus, produced by Nippon Waters Co., Ltd.
Detector: UV (wavelength: 254 nm) (maleic acid, acrylic acid), RI (unsaturated alcoholic monomer)
Columns: Inertsil, ODS-2 (4.6 mm × 50 mm) (1 column), ODS-2 (4.6 mm × 250 mm) (3 columns), produced by GL Science
Column temperature: 35 °C
Eluent: acetonitrile/0.1N acetic acid buffer (pH = 4.0) = 4/6 (weight ratio)

### <Composition of copolymer>:

In order to remove the unreacted unsaturated monocarboxylic monomer and the unreacted unsaturated dicarboxylic monomer, an aqueous copolymer solution (obtained by the polymerization) was placed into a dialyzing membrane (length: 40 cm), and then this membrane was made airtight. Spectra/Por Membrane (MWCO: 1,000, differential molecular weight: 1,000, produced by Spectrum Laboratories, Inc.) was used as the dialyzing membrane. Incidentally, in the present invention, another dialyzing membrane may be used if it has almost the same differential molecular weight as of the above dialyzing membrane.

The above dialyzing membrane was immersed into 2,000 g of water in a 2L beaker and then stirred with a stirrer. After 6 hours, the dialyzing membrane was taken out of the beaker, and then the outside of the dialyzing membrane was well washed with a water flow, and then the contents of the dialyzing membrane were taken out.

Then, they were concentrated with an evaporator.

Next, the unreacted unsaturated alcoholic monomer was removed by a cyclohexane extraction method.

A copolymer sample, having been obtained by removing the unreacted monomers in the above way, was measured by ¹H NMR (400 MHz) to determine the compositional ratio of the copolymer from the integral ratio in a chart of the above ¹H NMR.

The measurement conditions of the ¹H NMR (400 MHz) are as follows.
Device: UNITY plus-400, produced by Varian
Solvent: D₂O
Resonance frequency: 399.97 MHz
Probe: 5 mm switchable probe
Nucleus observed: hydrogen nucleus
Irradiation conditions: 90° pulse, 15.1 µsec (45° pulse was irradiated)
Waiting time: 3.0 sec
Number of times of integration: 16 times
Temperature: room temperature

### <Calcium-ion-binding ability>:

Standard calcium ion solutions for drawing a calibration curve were prepared by a process including the steps of: preparing 50 g each of 0.01 mol/L, 0.001 mol/L, and 0.0001 mol/L aqueous solutions from calcium chloride dihydrate; and then adjusting their pH in the range of 9.9 to 10.2 with a 1.0 % aqueous NaOH solution; and then adding thereto 1 mL of a 4 mol/L aqueous potassium chloride solution (hereinafter, abbreviated as aqueous 4M-KCl solution); and then sufficiently stirring the resultant mixture with a magnetic stirrer; thus preparing the sample solutions for drawing the calibration curve. In addition, a needed amount (50 g per sample) of 0.001 mol/L aqueous solution was prepared as a test standard calcium ion solution similarly from calcium chloride dihydrate.

Next, 10 mg (in terms of solid components) of a test sample (copolymer) was weighed out into a 100 cc beaker, and then thereto 50 g of the above test standard calcium ion solution was added, and then the contents of the beaker were stirred with a magnetic stirrer enough. Incidentally, the copolymer, used as the test sample, was a copolymer having been neutralized with a 48 % aqueous sodium hydroxide solution so that the pH would be 7.5 when the solid component content was 40 weight %. Next, similarly to the sample solutions for drawing the calibration curve, the pH of the resultant mixture was adjusted in the range of 9.9 to 10.2 with a 1.0 % aqueous NaOH solution, and then thereto 1 mL of the aqueous 4M-KCl solution was added; thus preparing a test sample solution.

The sample solutions for drawing the calibration curve and the test sample solution, having been prepared in the above ways, were measured by a calcium ion electrode 93-20 and a comparative electrode 90-01 (produced by OLION Co.) with a measurement device COMTITE-550 (produced by Hiranuma Sangyo Co., Ltd.).

The amount of calcium ion, having been bound to the sample (copolymer), was determined by calculation from the measured values of the sample solutions for drawing the calibration curve and from the measured value of the test sample solution. Then, the determined amount per 1 g of the solid components of the copolymer was denoted by the milligrams in terms of calcium carbonate, and its value was taken as the calcium-ion-binding ability value.

### <Clay dispersibility (measured in aqueous solution having calcium ion content of 50 ppm in terms of calcium carbonate)>:

What is herein referred to as buffer (1) was prepared by adding pure water to 67.56 g of glycine, 52.6 g of sodium chloride, and 2.4 g of NaOH to adjust the total weight to 600 g. Then, what is herein referred to as buffer (2) was prepared by a process including the steps of: adding 0.0817 g of calcium chloride dihydrate to 60 g of the buffer (1); and then further adding thereto pure water to adjust the total weight to 1,000 g. Then, 36 g of the buffer (2) was added to 4 g of a 0.1 weight % (in terms of solid component content by weight) aqueous solution of the copolymer to be measured, and then they were stirred together, thus preparing a dispersion liquid. Incidentally, the copolymer, used as the test sample, was a copolymer having been neutralized with a 48 % aqueous sodium hydroxide solution so that the pH would be 7.5 when the solid component content was 40 weight %. Next, 0.3 g of clay (test powders, class 11 produced by The Association of Powder Process Industry & Engineering, Japan (an incorporated body)) was placed into a test tube (produced by IWAKI GLASS: diameter 18 mm, height 180 mm), and then thereto 30 g of the above dispersion liquid was added, and then the test tube was sealed.

The test tube was shaken so that the clay would uniformly be dispersed. Thereafter, the test tube was allowed to stand stationary for 20 hours in a place as not exposed to direct sunlight. Thereafter, 5 cc of supernatant of the dispersion liquid was sampled to measure its absorbance with a UV spectroscope (UV-1200 produced by Shimadzu Corporation: 1 cm cell, wavelength = 380 nm). Then, a value given by dividing a value of this absorbance by a value of a case of using poly(sodium acrylate) (produced by Nippon Shokubai Co., Ltd.) (trade name: AQUALIC DL-40S) was taken as the clay dispersibility value. The larger this value is, the higher clay dispersibility it shows.

### [Example 1]:

An amount of 170 g of pure water, 67.4 g of maleic anhydride, and 0.0161 g of Fe(NH₄)₂(SO₄)₂·6H₂O (Mohr's salt) were charged into a SUS-made separable flask of 2.5 L as fitted with a reflux condenser and a stirrer. The resultant aqueous solution was heated until coming into a reflux state while being stirred.

Next, 144.4 g of 80 % acrylic acid (hereinafter abbreviated to 80 % AA), 104.6 g of an 80 % unsaturated polyalkylene glycol (obtained by an addition reaction of 10 mols of ethylene oxide to 1 mol of allyl alcohol) (hereinafter abbreviated to PEA-10), and 67.6 g of a 9.11 % aqueous hydrogen peroxide solution simultaneously started to be dropped from their respective separate dropping nozzles. Their respective periods of the droppings were as follows: as to the 80 % AA and the 80 % PEA-10, 180 minutes since the start of the dropping; and as to the 9.11 % aqueous hydrogen peroxide solution, 120 minutes since the start of the dropping. In addition, after 120 minutes from the start of the above droppings, 24.6 g of a 35 % aqueous hydrogen peroxide solution started to be dropped. Its period of the dropping was 60 minutes. All the above droppings were continuously carried out, and their rates were kept constant.

After the end of the droppings, aging was carried out at the reflux temperature for 120 minutes to complete the polymerization. After the completion of the polymerization, the resultant polymerization reaction liquid was cooled to obtain an aqueous solution of a water-soluble copolymer (1).

The resultant water-soluble copolymer (1) was measured by the various physical properties. Their results are shown in Table 1.

### [Example 2]:

An amount of 120 g of pure water, 147.0 g of maleic anhydride, and 0.0175 g of Fe(NH₄)₂(SO₄) ₂·6H₂O (Mohr's salt) were charged into a SUS-made separable flask of 2.5 L as fitted with a reflux condenser and a stirrer. The resultant aqueous solution was heated until coming into a reflux state while being stirred.

Next, 135 g of 80 % AA, 88.0 g of 80 % PEA-10, and 40 g of a 15.8 % aqueous hydrogen peroxide solution simultaneously started to be dropped from their respective separate dropping nozzles. Their respective periods of the droppings were as follows: as to the 80 % AA and the 80 % PEA-10, 180 minutes since the start of the dropping; and as to the 15.8 % aqueous hydrogen peroxide solution, 120 minutes since the start of the dropping. In addition, after 120 minutes from the start of the above droppings, 35.9 g of a 35 % aqueous hydrogen peroxide solution started to be dropped. Its period of the dropping was 60 minutes. All the above droppings were continuously carried out, and their rates were kept constant.

After the end of the droppings, aging was carried out at the reflux temperature for 120 minutes to complete the polymerization. After the completion of the polymerization, the resultant polymerization reaction liquid was cooled to obtain an aqueous solution of a water-soluble copolymer (2).

The resultant water-soluble copolymer (2) was measured by the various physical properties. Their results are shown in Table 1.

### [Example 3]:

An amount of 150 g of pure water was charged into a SUS-made separable flask of 2.5 L as fitted with a reflux condenser and a stirrer, and then heated until coming into a reflux state while being stirred.

Next, 135.0 g of 80 % AA, 119.9 g of 80 % PEA-10, 98.0 g of melted maleic anhydride, 50.0 g of a 48 % aqueous sodium hydroxide solution, 107.7 g of a 15 % aqueous sodium persulfate solution, and 61.5 g of a 35 % aqueous hydrogen peroxide solution simultaneously started to be dropped from their respective separate dropping nozzles. The droppings were continuously carried out, and their rates were kept constant. Their respective periods of the droppings were as follows: as to the 80 % AA and the 80 % PEA-10, 180 minutes; as to the melted maleic anhydride, the 48 % aqueous sodium hydroxide solution, and the 35 % aqueous hydrogen peroxide solution, 60 minutes; and as to the 15 % aqueous sodium persulfate solution, 200 minutes.

After the end of the dropping of the 15 % aqueous sodium persulfate solution, aging was carried out at the reflux temperature for 90 minutes to complete the polymerization. After the completion of the polymerization, the resultant polymerization reaction liquid was cooled to obtain a water-soluble copolymer (3).

The resultant water-soluble copolymer (3) was measured by the various physical properties. Their results are shown in Table 1.

### [Example 4]:

A water-soluble copolymer (4) was obtained in the same way as of Example 3 except that: the periods of the droppings of the 80 % AA and the 80 % PEA-10 were changed to 120 minutes; and the period of the dropping of the 15 % aqueous sodium persulfate solution was changed to 140 minutes.

The resultant water-soluble copolymer (4) was measured by the various physical properties. Their results are shown in Table 1.

### [Example 5]:

A water-soluble copolymer (5) was obtained in the same way as of Example 3 except that: the amount of the 80 % PEA-10 was changed to 93.4 g; and the amount of the 15 % aqueous sodium persulfate solution was changed to 105.9 g; and the amount of the 35 % aqueous hydrogen peroxide solution was changed to 60.6 g.

The resultant water-soluble copolymer (5) was measured by the various physical properties. Their results are shown in Table 1.

### [Example 6]:

A water-soluble copolymer (6) was obtained in the same way as of Example 4 except that the 80 % PEA-10 was replaced with an 80 % unsaturated alcoholic monomer (obtained by an addition reaction of 10 mols of ethylene oxide to 1 mol of isoprenol (3-methyl-3-buten-1-ol)).

The resultant water-soluble copolymer (6) was measured by the various physical properties. Their results are shown in Table 1.

### [Comparative Example 1]:

An amount of 120 g of pure water and 79.2 g of maleic anhydride were charged into a SUS-made separable flask of 0.5 L as fitted with a reflux condenser and a stirrer. While the resultant aqueous solution was stirred, 108 g of a 48 % aqueous sodium hydroxide solution was dropped thereto. The purgation with nitrogen was carried out, and then the contents of the flask was heated to 90 °C while being stirred.

Next, 81 g of 80 % AA, 360 g of a 50 % unsaturated polyalkylene glycol (obtained by an addition reaction of 10 mols of ethylene oxide to 1 mol of 3-methyl-2-buten-1-ol) (hereinafter abbreviated to IPN-10), and 96.8 g of a 17.4 % aqueous ammonium persulfate solution simultaneously started to be dropped from their respective separate dropping nozzles. Their respective periods of the droppings were as follows: as to the 80 % AA, 90 minutes since the start of the dropping; and as to the 50 % EPN-10 and the 17.4 % aqueous ammonium persulfate solution, 100 minutes since the start of the dropping. All the above droppings were continuously carried out, and their rates were kept constant.

After the end of the droppings, aging was carried out at 90 °C for 60 minutes to complete the polymerization. After the completion of the polymerization, the resultant polymerization reaction liquid was cooled to obtain an aqueous solution of a water-soluble copolymer (c1).

The resultant water-soluble copolymer (c1) was measured by the various physical properties. Their results are shown in Table 1.

### [Comparative Example 2]:

An amount of 228.7 g of pure water, 77.6 g of maleic anhydride, and 0.026 g of Fe(NH₄)₂(SO₄)₂·6H₂O (Mohr's salt) were charged into a SUS-made separable flask of 2.5 L as fitted with a reflux condenser and a stirrer. The resultant aqueous solution was heated until coming into a reflux state while being stirred.

Next, 166.4 g of 80 % AA, 238.1 g of a 63.0 % unsaturated polyalkylene glycol (obtained by an addition reaction of 50 mols of ethylene oxide to 1 mol of 3-methyl-2-buten-1-ol), and 29.5 g of a 19.7 % aqueous hydrogen peroxide solution simultaneously started to be dropped from their respective separate dropping nozzles. Their respective periods of the droppings were all 120 minutes. All the above droppings were continuously carried out, and their rates were kept constant.

After the end of the droppings, aging was carried out at the reflux temperature for 60 minutes to complete the polymerization. After the completion of the polymerization, the resultant polymerization reaction liquid was cooled to obtain an aqueous solution of a water-soluble copolymer (c2).

The resultant water-soluble copolymer (c2) was measured by the various physical properties. Their results are shown in Table 1.

### [Example 7]:

A water-soluble copolymer (7) was obtained in the same way as of Example 4 except that: immediately after the end of the dropping of the 15 % aqueous sodium persulfate solution, a 48 % aqueous sodium hydroxide solution was added to adjust the pH of the polymerization reaction liquid to 7; and then aging was carried out at the reflux temperature for 30 minutes to complete the polymerization.

The resultant water-soluble copolymer (7) was measured by the various physical properties. Their results are shown in Table 2.

### [Example 8]:

A water-soluble copolymer (8) was obtained in the same way as of Example 4 except that: after the end of the dropping of the 15 % aqueous sodium persulfate solution, the reflux was continued in an intact state for 30 minutes; and then a 48 % aqueous sodium hydroxide solution was added to adjust the pH of the polymerization reaction liquid to 7; and then aging was carried out at the reflux temperature for 30 minutes to complete the polymerization.

The resultant water-soluble copolymer (8) was measured by the various physical properties. Their results are shown in Table 2.

### [Example 9]:

An amount of 150 g of pure water was charged into a SUS-made separable flask of 2.5 L as fitted with a reflux condenser and a stirrer, and then heated until coming into a reflux state while being stirred.

Next, 135.0 g of 80 % AA, 233.4 g of 32 % PEA-10, 98.0 g of melted maleic anhydride, 50.0 g of a 48 % aqueous sodium hydroxide solution, 105.9 g of a 15 % aqueous sodium persulfate solution, and 60.6 g of a 35 % aqueous hydrogen peroxide solution simultaneously started to be dropped from their respective separate dropping nozzles. The droppings were continuously carried out, and their rates were kept constant. Their respective periods of the droppings were as follows: as to the 80 % AA and the 32 % PEA-10, 180 minutes; as to the melted maleic anhydride, the 48 % aqueous sodium hydroxide solution, and the 35 % aqueous hydrogen peroxide solution, 60 minutes; and as to the 15 % aqueous sodium persulfate solution, 200 minutes.

After the end of the dropping of the 15 % aqueous sodium persulfate solution, aging was carried out at the reflux temperature for 90 minutes to complete the polymerization. After the completion of the polymerization, the resultant polymerization reaction liquid was cooled to obtain a water-soluble copolymer (9).

The resultant water-soluble copolymer (9) was measured by the various physical properties. Their results are shown in Table 2.

### [Example 10]:

A water-soluble copolymer (10) was obtained in the same way as of Example 9 except that: the amount of the 32 % PEA-10 was changed to 299.9 g; and the amount of the 15 % aqueous sodium persulfate solution was changed to 71.8 g; and the amount of the 35 % aqueous hydrogen peroxide solution was changed to 46.2 g.

The resultant water-soluble copolymer (10) was measured by the various physical properties. Their results are shown in Table 2.

**Table 1**

| | **Example 1** | **Example 2** | **Example 3** | **Example 4** |
|---|---|---|---|---|
| Content of structural unit (weight %) | | | | |
| Structural unit (1) | 40.8 | 30.6 | 35.8 | 35.2 |
| Structural unit (2) | 27.3 | 45.9 | 33.0 | 33.0 |
| Structural unit (3) | 31.9 | 23.5 | 31.2 | 31.8 |
| Weight-average molecular weight Mw | 21000 | 6200 | 6800 | 6300 |
| Acid value | 9.75 | 11.1 | 9.81 | 9.72 |
| Solid component content (weight %) | 50.8 | 64.5 | 51.4 | 51.4 |

| Residual monomer content (weight %) | | | | |
|---|---|---|---|---|
| Monomer (1a) | 0.4 | 0 | 0.5 | 0.5 |
| Monomer (2a) or (2b) | 0.3 | 7.7 | 0.5 | 2.1 |
| Monomer (3a) | 2.0 | 0 | 0.9 | 1.0 |
| Calcium-ion-binding ability (A) | 203 | 205 | 204 | 195 |
| Clay dispersibility (B) | 1.08 | 1.05 | 1.25 | 1.27 |
| (CaCO₃: 50 ppm) | | | | |
| (A) × (B) | 219.2 | 215.3 | 255.0 | 247.7 |

| | **Example 5** | **Example 6** | **Comparative Example 1** | **Comparative Example 2** |
|---|---|---|---|---|
| Content of structural unit (weight %) | | | | |
| Structural unit (1) | 37.7 | 37.1 | 18.1 | 35.7 |
| Structural unit (2) | 36.2 | 34.0 | 22.9 | 21.3 |
| Structural unit (3) | 26.1 | 28.9 | 59.0 | 43.0 |
| Weight-average molecular weight Mw | 5400 | 4900 | 48000 | 11000 |
| Acid value | 10.2 | 10.1 | 8.18 | 8.74 |
| Solid component content (weight %) | 50.4 | 51.4 | 44.2 | 46.0 |

| Residual monomer content (weight %) | | | | |
|---|---|---|---|---|
| Monomer (1a) | 0.3 | 0.5 | 0 | 0.03 |
| Monomer (2a) or (2b) | 0.5 | 1.8 | 0 | 5.62 |
| Monomer (3a) | 0.7 | 1.3 | 0.97 | 5.4 |
| Calcium-ion-binding ability (A) | 205 | 201 | 203 | 177 |
| Clay dispersibility (B) (CaCO₃: 50 ppm) | 1.28 | 1.23 | 0.94 | 0.82 |
| (A) × (B) | 262.4 | 247.2 | 190.8 | 145.1 |

**Table 2**

| | **Example 7** | **Example 8** | **Example 9** | **Example 10** |
|---|---|---|---|---|
| Content of structural unit (weight %) | | | | |
| Structural unit (1) | 36.9 | 37.4 | 39.3 | 35.1 |
| Structural unit (2) | 35.0 | 35.1 | 37.1 | 34.2 |
| Structural unit (3) | 28.1 | 27.5 | 23.6 | 30.7 |
| Weight-average molecular weight Mw | 4600 | 4500 | 4200 | 6100 |
| Acid value | 9.26 | 9.32 | 10.4 | 9.96 |
| Solid component content (weight %) | 48.0 | 48.1 | 43.0 | 43.2 |

| Residual monomer content (weight %) | | | | |
|---|---|---|---|---|
| Monomer (1a) | 0.01 | 0.01 | 0.6 | 0.5 |
| Monomer (2a) or (2b) | 0.3 | 0.2 | 0.7 | 0.5 |
| Monomer (3a) | 0.8 | 0.7 | 1.0 | 0.8 |
| Calcium-ion-binding ability (A) | 197 | 196 | 184 | 207 |
| Clay dispersibility (B) | 1.31 | 1.30 | 1.18 | 1.31 |

| (CaCO₃: 50 ppm) | | | | |
|---|---|---|---|---|
| (A) × (B) | 258.1 | 254.8 | 217.1 | 271.2 |

### [Examples 11 to 20 and Comparative Examples 3 to 4]:

Detergent compositions containing the water-soluble copolymers (1) to (10), (c1), and (c2), having been obtained from the above Examples and Comparative Examples, were evaluated by the compatibility with liquid detergents.

Specifically, the water-soluble copolymers (1) to (10), (c1), and (c2), having been obtained from the above Examples and Comparative Examples, were adjusted to solid component content = 40 weight % and pH = 7.5. Then, from the resultant copolymers and the components as listed in Tables 3 to 4, detergent compositions (1) to (10), (c1), and (c2) which were liquid detergents were prepared. The components were stirred so sufficiently as to be uniform, and then bubbles were removed, and thereafter the turbidity value was measured at 25 °C. As to the turbidity value, the Turbidity (kaolin turbidity: mg/L) was measured with NDH2000 (a turbidimeter, produced by Nippon Denshoku Co., Ltd.).

The results of the evaluation were based on the following three grades as the standards.
○: Turbidity value (0 to 50 (mg/L)). The separation, precipitation, or white turbidness is not seen with the eye.
Δ: Turbidity value (50 to 200 (mg/L)). Slight white turbidness is seen with the eye.
×: Turbidity value (not less than 200 (mg/L)). White turbidness is seen with the eye.

The results are shown in Tables 3 to 4.

Incidentally, in Tables 3 to 4, the numerical values of the amounts of the addition denote those in terms of solid component content or effective component content, and the unit of these numerical values is weight %.

In addition, in these tables, Neopelex F-65 denotes sodium dodecylbenzenesulfonate (purity: about 65 %, produced by Kao Corporation).

**Table 3**

| | | **Example 11** | **Example 12** | **Example 13** | **Example 14** |
|---|---|---|---|---|---|
| Detergent composition | | (1) | (2) | (3) | (4) |
| Mixing | Neopelex F-65 | 40 | 40 | 40 | 40 |
| | Diethanolamine | 10 | 10 | 10 | 10 |
| | Ethanol | 5 | 5 | 5 | 5 |
| | Propylene glycol | 15 | 15 | 15 | 15 |
| | Water-soluble copolymer (kind) | 0.5 (1) | 0.5 (2) | 0.5 (3) | 0.5 (4) |
| | Water | Balance | Balance | Balance | Balance |
| | Compatibility | ○ | ○ | ○ | ○ |

| | | **Example 15** | **Example 16** | **Comparative Example 3** | **Comparative Example 4** |
|---|---|---|---|---|---|
| Detergent composition | | (5) | (6) | (c1) | (c2) |
| Mixing | Neopelex F-65 | 40 | 40 | 40 | 40 |
| | Diethanolamine | 10 | 10 | 10 | 10 |
| | Ethanol | 5 | 5 | 5 | 5 |
| | Propylene glycol | 15 | 15 | 15 | 15 |
| | Water-soluble copolymer (kind) | 0.5 (5) | 0.5 (6) | 0.5 (c1) | 0.5 (c2) |
| | Water | Balance | Balance | Balance | Balance |
| | Compatibility | ○ | ○ | ○ | ○ |
| Balance: Added so that the total amount of the detergent composition would be 100 weight %. | | | | | |

**Table 4**

| | | **Example 17** | **Example 18** | **Example 19** | **Example 20** |
|---|---|---|---|---|---|
| Detergent composition | | (7) | (8) | (9) | (10) |
| Mixing | Neopelex F-65 | 40 | 40 | 40 | 40 |
| | Diethanolamine | 10 | 10 | 10 | 10 |
| | Ethanol | 5 | 5 | 5 | 5 |
| | Propylene glycol | 15 | 15 | 15 | 15 |
| | Water-soluble copolymer (kind) | 0.5 (7) | 0.5 (8) | 0.5 (9) | 0.5 (10) |
| | Water | Balance | Balance | Balance | Balance |
| Compatibility | | ○ | ○ | ○ | ○ |
| Balance: Added so that the total amount of the detergent composition would be 100 weight %. | | | | | |

Various details of the invention may be changed without departing from its spirit not its scope. Furthermore, the foregoing description of the preferred embodiments according to the present invention is provided for the purpose of illustration only, and not for the purpose of limiting the invention as defined by the appended claims and their equivalents.

## Claims

1. A water-soluble copolymer, which is a water-soluble copolymer containing the following structural unit (1) derived from an unsaturated monocarboxylic monomer, the following structural unit (2) derived from an unsaturated dicarboxylic monomer, and the following structural unit (3) derived from an unsaturated alcoholic monomer, wherein:
the structural unit (1) is 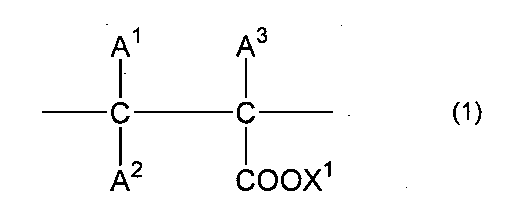 (in general formula (1) above: A¹, A², and A³ each independently represent a hydrogen atom or a methyl group; and X¹ represents a hydrogen atom, a monovalent metal, a divalent metal, an ammonium group, or an organic amine group);
the structural unit (2) is 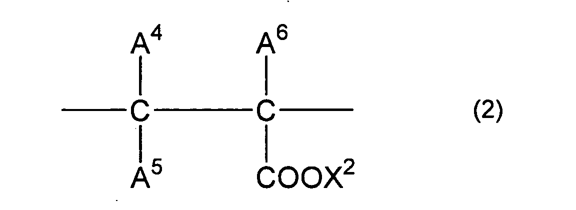 (in general formula (2) above: A⁴ and A⁵ each independently represent a hydrogen atom, a methyl group, or -COOX³; and A⁶ represents a hydrogen atom, a methyl group, or -CH₂COOX⁴; and further, only any one of A⁴, A⁵, and A⁶ is -COOX³ or -CH₂COOX⁴; and X², X³, and X⁴ each independently or all together represent a hydrogen atom, a monovalent metal, a divalent metal, an ammonium group, or an organic amine group); and
the structural unit (3) is 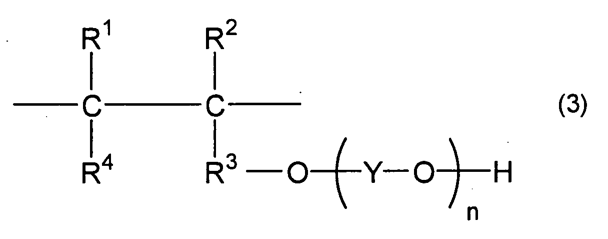 (in general formula (3) above: R¹, R², and R⁴ each independently represent a hydrogen atom or a methyl group; and R¹ (or R⁴) and R² are not simultaneously the methyl groups; and R³ represents -CH₂-, -(CH₂)₂-, or -C(CH₃)₂-; and the total number of the carbon atoms in R¹, R², R³, and R⁴ is in the range of 1 to 3; and Y represents an alkylene group having 2 to 18 carbon atoms; and n is an integer of 1 to 300);
with the water-soluble copolymer being **characterized by** having:
a structural unit (3) content of 0.1 to 40 weight % (but not including 40 weight %); and
a product of not less than 200 of the calcium-ion-binding ability and the clay dispersibility (which is measured in an aqueous solution having a calcium ion content of 50 ppm in terms of calcium carbonate) under conditions of solid component content = 40 weight % and pH = 7.5.

2. A detergent builder, which comprises, as an essential component, the water-soluble copolymer as recited in claim 1.

3. A detergent composition, which comprises a detergent builder that contains, as an essential component, the water-soluble copolymer as recited in claim 1.

4. A detergent composition according to claim 3, which is used for liquid detergents.

5. A water-treating agent, which comprises, as an essential component, the water-soluble copolymer as recited in claim 1.

6. A dispersant, which comprises, as an essential component, the water-soluble copolymer as recited in claim 1.
